# EUROPÄISCHE PATENTSCHRIFT

(11) **EP 1 197 350 B1**
(45) Veröffentlichungstag und Bekanntmachung des Hinweises auf die Patenterteilung: **09.01.2008**
(21) Anmeldenummer: 01117285.5
(22) Anmeldetag: 17.07.2001
(51) Int. Cl.: B42D 15/10

(54) **Optisches Merkmal, insbesondere für Wertdokumente, und Herstellungsverfahren zur nachträglichen Individualisierung oder Datenspeicherung**
Optical characteristic, particularly for security documents, and method for supplementary personalising or data storage
Caractéristique optique, en particulier pour les papiers de valeur, et méthode pour l'individualisation supplémentaire ou le stockage de données

(30) Priorität: 12.10.2000 DE 10050556; 09.11.2000 DE 10055429
(43) Veröffentlichungstag der Anmeldung: 17.04.2002
(73) Patentinhaber: Giesecke & Devrient GmbH, 81677 München (DE)
(72) Erfinder: Menz, Irina, Dr., 86420 Diedorf (DE); Dausmann, Günther, Dipl.-Ing., 85435 Erding (DE)
(74) Vertreter: Klunker . Schmitt-Nilson . Hirsch

(56) Entgegenhaltungen:
- EP-A- 0 216 947
- EP-A- 0 219 012
- DE-A- 19 530 495
- US-A- 5 712 731

## Beschreibung

Die Erfindung betrifft ein optisches Merkmal, insbesondere für Wertdokumente, einen Datenträger mit zumindest einem solchen optischen Merkmal und Verfahren zur Herstellung eines solchen optischen Merkmals.

Dokumente, Urkunden, Banknoten, Ausweise, Plastikkarten etc. lassen sich mit Hilfe moderner hochauflösender Farbscanner und Farblaserdrucker heutzutage oftmals detailgenau und farbecht reproduzieren.

Es besteht daher ein Bedürfnis, diese Gegenstände durch zusätzlich aufgebrachte Echtheitsmerkmale fälschungssicher zu machen.

Hierzu können z. B. optische Echtheitsmerkmale eingesetzt werden, die unter verschiedenen Blickrichtungen ein anderes Bild ergeben.

So ist aus EP 0 219 012 A2 bekannt, auf einem Datenträger eine Lentikularlinsenstruktur aufzubringen und mit Hilfe eines Laserstrahls die optischen Eigenschaften des darunterliegenden Materials zu verändern. Bei Einstrahlen des Laserstrahls aus einer bestimmten Richtung wirkt die Lentikularlinsenstruktur derart, daß nur ein entsprechender Teilbereich von dem Laserlicht getroffen wird. Nur unter einer entsprechenden Richtung, die der Einfallsrichtung des Laserstrahls entspricht, kann das entstandene Bild beobachtet werden. Einstrahlen eines anderen Lichtmusters aus einer zweiten Blickrichtung zur Veränderung der optischen Eigenschaften des darunterliegenden Aufzeichnungsmaterials ergibt ein Bild, das von der zweiten Richtung aus beobachtbar ist. Auf diese Weise wird ein Kippeffekt erzielt, der z. B. kopiertechnisch schwer oder gar nicht nachzuahmen ist.

Solche Kippeffekte können auch unabhängig von einer erhöhten Fälschungssicherheit zur optischen Gestaltung verschiedenster Gegenstände eingesetzt werden, entweder um den optischen Eindruck zu verbessern oder eine Individualisierung vorzunehmen.

Bei dem Verfahren gemäß dem Stand der Technik ist es notwendig, sowohl bei der Herstellung als auch bei der späteren Betrachtung eine Lentikularlinsenstruktur vorliegen zu haben. Im speziellen bei Wertdokumenten, deren Dicke begrenzt ist, ist eine solche Lentikularlinsenstruktur unerwünscht. Zudem muß diese auf dem Material aufgebracht sein und neigt daher leicht zu Verletzungen, z. B. Kratzern. Schließlich läßt sich die Struktur einer Lentikularlinsenfolie oftmals nicht mit den Anforderungen an die Flexibilität des damit ausgerüsteten Gegenstands in Einklang bringen.

Aufgabe der vorliegenden Erfindung ist es daher, ein einfach herzustellendes und robustes optisches Merkmal, ein Verfahren zu dessen Herstellung und einen Datenträger mit einem solchen optischen Merkmal anzugeben.

Diese Aufgabe wird mit einem optischen Merkmal mit den Merkmalen des Anspruchs 1, einem Datenträger mit den Merkmalen des Anspruchs 36, einem Verfahren mit den Merkmalen des Anspruchs 17 oder einem Verfahren mit den Merkmalen des Anspruchs 22 gelöst. Vorteilhafte Ausführungsformen und Ausgestaltungen sind Gegenstand der Unteransprüche.

Ein erfindungsgemäßes optisches Merkmal umfaßt zumindest ein wenigstens zweikanaliges Hologramm. Dieses Hologramm dient der holographischen Rekonstruktion verschiedener Bilder aus verschiedenen Blickrichtungen, wobei ein zweikanaliges Hologramm zwei verschiedene Blickrichtungen zur Verfügung stellt. Das Hologramm weist Bereiche auf, die unter Lichteinfall jeweils eine Blickrichtung rekonstruieren. Jeder Blickrichtung, d. h. jedem Kanal, ist ein Bereich zugeordnet. Dabei kann ein Bereich, der zur Rekonstruktion eines Bildes aus einer Blickrichtung dient, aus mehreren über das Hologramm verteilten Teilen bestehen. Diese Teile können Linien sein, die vorzugsweise für die verschiedenen Bereiche alternierend angeordnet sind. Eine solche Anordnung hat den Vorteil, daß sie mit Hilfe einer Linienmaske sehr leicht hergestellt werden kann. Ebenso können die einzelnen Bereiche zur Rekonstruktion eines Bildes in einer Blickrichtung auch über das Aufzeichnungsmaterial ggf. zufällig verteilt angeordnet sein.

Die Bereiche wiederum umfassen Unterbereiche, die an der Bildrekonstruktion des jeweiligen Bildes nicht teilhaben.

Ein solches optisches Merkmal ermöglicht verschiedene Ansichten, wenn es unter verschiedenen Blickrichtungen, z. B. bei einem zweikanaligen Hologramm aus zwei verschiedenen Blickrichtungen, betrachtet wird. Auf diese Weise läßt sich ein Kippeffekt realisieren. Die Ausgestaltung in holographischer Form erschwert zudem die Fälschung signifikant. Eine holographische Struktur ist kopiertechnisch sehr schwierig nachzuahmen. Andererseits sind keine zusätzlichen optischen Strukturen notwendig, um die Betrachtung der verschiedenen Ansichten aus verschiedenen Richtungen zu ermöglichen. Auf diese Weise ist eine Kompatibilität mit dem jeweiligen Trägermaterial leicht herstellbar. Zum Beispiel können derartige optische Sicherheitsmerkmale sehr gut in oder auf Plastikkarten oder Banknoten eingesetzt werden.

Mit Hilfe eines erfindungsgemäßen optischen Merkmals läßt sich ein optisch ansprechender Kippeffekt erzeugen. Bei Einsatz eines zweikanaligen Hologrammes kann ein stereoskopischer Effekt erzeugt werden, wenn die einzelnen Kanäle die Blickrichtungen für die einzelnen Augen des Betrachters darstellen.

Besonders vorteilhaft läßt sich das Merkmal zur Erhöhung der Fälschungssicherheit von Datenträgern jeglicher Art, im speziellen natürlich von Wertdokumenten, einsetzen.

Die Unterbereiche, die an der Bildrekonstruktion aus der jeweiligen Blickrichtung nicht teilhaben, können so angeordnet sein, daß sich bei Betrachtung der holographisch rekonstruierten Struktur ein Muster dieser nicht an der holographischen Rekonstruktion teilhabenden Bereiche ergibt, das eine erkennbare Information liefert. Auf diese Weise läßt sich z. B. eine Identifizierungsnummer, Registernummer oder ein entsprechendes Bild in dem optischen Merkmal speichern.

Die an der Bildrekonstruktion nicht teilhabenden Unterbereiche können z. B. geschwärzte Bereiche des Hologrammträgers sein. Besonders einfach und robust ist jedoch eine Ausgestaltung, in der die an der Bildrekonstruktion nicht teilhabenden Unterbereiche des Hologramms teilweise zerstört sind.

Bei einer besonderen Ausgestaltung sind die Unterbereiche derart teilweise zerstört worden, daß ein Graustufeneffekt eintritt. Ein größerer Zerstörungsgrad in einem Bereich bewirkt dabei eine andere Graustufe als ein kleinerer Zerstörungsgrad.

Besonders vorteilhaft ist dabei eine Ausführungsform des erfindungsgemäßen optischen Merkmals, bei dem die so erzeugten Aussparungen mit einem Laser in die Hologrammstruktur eingebracht wurden.

Die Unterbereiche, die an der Rekonstruktion des Bildes aus dem jeweiligen Bereich nicht teilnehmen sollen, können bei einer anderen Ausführungsform auch durch Überdrucken der entsprechenden Flächen erhalten werden, so daß diese an der Rekonstruktion aus dem jeweiligen Bereich nicht mehr teilnehmen.

Die Bereiche, die der holographischen Rekonstruktion von Bildern aus verschiedenen Richtungen entsprechen, können in bekannter Weise zur holographischen Darstellung von zweidimensionalen oder dreidimensionalen Bildern dienen. In diesem Fall werden bei der Rekonstruktion des Hologramms gerichtete Objektstrahlen rekonstruiert.

Je nach Blickrichtung ergibt sich dann die entsprechende zweidimensionale bzw. dreidimensionale Struktur, die holographisch gespeichert ist, wobei die Bildinformation, die aus den Unterbereichen der jeweiligen Blickrichtungsbereiche stammen, nicht an der holographischen Rekonstruktion teilnehmen und dementsprechend als Negativmuster sichtbar werden.

Eine einfache Ausgestaltung sieht vor, daß die Bereiche zur holographischen Rekonstruktion jeweils diffuse Objektstrahlen aus verschiedenen Richtungen holographisch rekonstruieren. Das Negativmuster, das den Unterbereichen der holographisch rekonstruierenden Bereiche entspricht, tritt dann wie auf einer Mattscheibe hervor, wenn die Struktur aus der Blickrichtung, die zu diesem Bereich gehört, betrachtet wird.

Als Hologrammstruktur können alle Arten von Hologrammen zum Einsatz kommen, z. B. Volumen-, Transmissions- oder Reflexionshologramme.

Die einzelnen Bereiche zur Rekonstruktion des Lichtes in eine bestimmte Blickrichtung können wiederum in sich farbgetrennte Regenbogenhologramme umfassen, um einen Farbeffekt zu erreichen. Ebenso können mehrfarbige Volumenhologramme für die einzelnen Kanäle eingesetzt werden.

Besonders vorteilhaft ist der Einsatz von Prägehologrammstrukturen, die einfach in der Massenproduktion herstellbar sind und nur eine geringe Dicke aufweisen.

Die einzelnen Bereiche zur Rekonstruktion eines Bildes in eine bestimmte Blickrichtung können jeweils aus mehreren Teilen bestehen. Vorzugsweise sind diese Teile linienförmig und alternierend angeordnet.

Bei einer anderen Ausführungsform umfassen die einzelnen Bereiche zur Rekonstruktion des Lichtes in einer bestimmten Blickrichtung jeweils mehrere Teile, die ihrerseits wieder mindestens ein Pixel umfassen. Die einzelnen Teile der Bereiche, die zur Rekonstruktion des Lichtes in einer bestimmten Blickrichtung dienen, können dabei über die gesamte Fläche des optischen Merkmales verteilt angeordnet sein und so die Fälschungssicherheit noch stärker erhöhen. Die Anordnung kann z. B. zufällig erfolgen.

Eine solche Ausführungsform des erfindungsgemäßen optischen Merkmals umfaßt also Bereiche, die jeweils das Licht in eine bestimmte Richtung rekonstruieren. Diese Bereiche können jeweils aus mehreren Teilen bestehen, die über das optische Merkmal verteilt angeordnet sind. Die Bereiche umfassen andererseits Unterbereiche, die an der holographischen Rekonstruktion nicht teilnehmen, indem sie z. B. zerstört oder geschwärzt worden sind. Jeder einzelne Bereich bzw. die zu jedem einzelnen Bereich gehörenden Teile können z. B. wiederum aus farbgetrennten Regenbogenhologrammen bestehen. Ein solches optisches Merkmal hat eine hervorragende Fälschungssicherheit durch die angegebene Verteilung der Information, die in den einzelnen Bereichen enthalten ist und der zusätzlichen Information, die in den geschwärzten bzw. zerstörten Unterbereichen enthalten ist.

Bei einer Weiterbildung des optischen Merkmals sind die einzelnen Bereiche zur Rekonstruktion des Lichtes in einer bestimmten Blickrichtung jeweils mehrere Teile mit mindestens einem Pixel je Grundfarbe. Auf diese Weise lassen sich farbige Zusatzeffekte erreichen. Eine weitere Weiterbildung sieht vor, daß die Pixel, die zu den einzelnen Grundfarben gehören, wiederum über das gesamte optische Merkmal verteilt sind, z. B. in zufälliger Anordnung mit Hilfe eines Computerzufallsgenerators.

Die Hologrammstruktur kann z. B. in den Unterbereichen, die an der holographischen Bildreproduktion nicht teilnehmen, durchsichtig sein. Ein besonders hoher Kontrast läßt sich erreichen, wenn das Hologramm auf einer dunklen Fläche aufgebracht ist.

Bei einer anderen vorteilhaften Ausführungsform ist das Hologramm rückseitig reflektierend, vorzugsweise metallisch, beschichtet. Auf diese Weise ist der optische Effekt besonders hell. Ein ähnlicher Effekt läßt sich erreichen, wenn das Hologramm auf einer reflektierenden Oberfläche befestigt wird.

Bei einem erfindungsgemäßen Verfahren wird ein zumindest zweikanaliges Hologramm aufgenommen, wobei die Information für die einzelnen Kanäle in verschiedenen Bereichen des Hologramms aufgezeichnet wird. In Unterbereichen der einzelnen Bereiche zur Rekonstruktion eines Kanales in einer Blickrichtung wird durch Veränderung der optischen Eigenschaften ein Muster eingebracht. Dieser Schritt wird für jeden Kanal mit ggf. verschiedenen Mustern wiederholt. Ein Bereich kann dabei mehrere Teile, die auf dem Hologramm verteilt sind, umfassen.

Die Verarbeitung des belichteten Hologrammaufzeichnungsmaterials erfolgt z.B. in für die Herstellung von Hologrammen bekannter Weise, umfassend z. B. den Entwicklungsprozeß.

Das mehrkanalige Hologramm, das mit dem erfindungsgemäßen Verfahren hergestellt wird, hat die Information für verschiedene Blickrichtungen an verschiedenen Stellen des Hologramms gespeichert. Wird nun auf die Bereiche der Hologrammstruktur die zur Rekonstruktion in einer entsprechenden Blickrichtung dienen, ein Muster aufgebracht, so werden nur diese Bereiche beeinflußt, die zu dieser Blickrichtung gehören. Die veränderten optischen Eigenschaften in den Unterbereichen dieser Bereiche lassen sich dementsprechend nur aus einer Blickrichtung sehen.

Die Teile der Hologrammstruktur, die mit dem Lichtmuster beleuchtet werden müssen und den Unterbereichen der entsprechenden Bereiche zur Rekonstruktion einer Blickrichtung entsprechen, können z. B. mit Hilfe eines Computers berechnet werden. Diese Vorgehensweise ist insbesondere dann vorteilhaft, wenn das Hologramm selbst auch ein computergeneriertes Hologramm ist.

Auf sehr einfache Weise läßt sich jedoch auch auf optischem Wege der entsprechende Effekt erzielen. Es wird ein zumindest zweikanaliges Hologramm aufgezeichnet, wobei die Information verschiedener Kanäle in verschiedenen Bereichen aufgezeichnet wird. Dabei werden die verschiedenen Bereiche für die verschiedenen Kanäle bei der Aufnahme des Hologramms durch eine unterschiedliche Maskierung des holographischen Aufzeichnungsmaterials ausgewählt.

Eine mögliche Art der Maskierung ist z. B. das Einbringen eines Linienrasters in den Strahlengang des Objektlichts und/oder des Referenzlichts während der Aufnahme des Hologramms. Auf diese Weise werden bei Beleuchtung aus einer Blickrichtung nur die nicht von dem Linienraster abgedeckten Bereiche des Hologramms beleuchtet und damit die entsprechende Aufnahmeschicht belichtet.

Während der Belichtung mit Objektlicht aus einer anderen Richtung wird die Maskierung versetzt, z. B. das Linienraster verschoben. Auf diese Weise wird für das Licht aus dieser Blickrichtung ein anderer Bereich der Hologrammträgerstruktur ausgewählt und belichtet.

So läßt sich auf einfache Weise realisieren, daß die Belichtung für verschiedene Blickrichtungen an verschiedenen Orten der Hologrammträgerstruktur stattfindet.

Wiederum läßt sich in die so entstandene Hologrammstruktur die Änderung der optischen Eigenschaften für die entsprechenden Unterbereiche, die der darzustellenden Information dienen, durch eine Computerberechnung festlegen und z. B. mit einem Laser ansteuern. Bei einer anderen Ausgestaltung wird z. B. das zumindest zweikanalige Hologramm mit einer Lichtquelle, z. B. einer Laserdiode, beleuchtet.

Das Licht dieser Lichtquelle trifft auf einen Teil eines Bereiches, der zur Rekonstruktion in einer bestimmten Richtung dient. Das Licht wird also in dieser Richtung rekonstruiert. Auf diese Weise kann festgestellt werden, in welche Richtung der gerade mit der Lichtquelle beleuchtete Bereich rekonstruiert. Dementsprechend wird festgelegt, welche Information durch Veränderung der optischen Eigenschaften in Unterbereichen dieses Bereiches eingebracht werden soll. In den so bestimmten Unterbereichen wird die holographische Struktur z. B. zerstört oder geschwärzt, so daß sie an der holographischen Rekonstruktion nicht mehr teilnimmt. Der entsprechende Unterbereich tritt also als negatives Bild in dem Teil des Bereiches auf. In einem weiteren Schritt wird ein Teil eines anderen Bereiches des zumindest zweikanaligen Hologramms mit einer Lichtquelle beleuchtet und wiederum beobachtet, in welche Richtung das Licht rekonstruiert. Dann wird ebenso verfahren, wie im ersten Schritt.

Selbstverständlich kann bei der Feststellung, welcher Blickrichtung der jeweils mit der Lichtquelle gerade beleuchtete Teil eines Bereiches entspricht, auch ein umgekehrter Strahlengang eingesetzt werden.

Die optischen Eigenschaften der Unterbereiche, die in den Bereichen liegen, die zur Rekonstruktion eines Bildes gehören und an der Rekonstruktion selber nicht teilnehmen, können z. B. durch Schwärzung der entsprechenden Unterbereiche erzeugt werden. Besonders einfach läßt sich jedoch der erfindungsgemäße Effekt erreichen, wenn die entsprechenden Unterbereiche teilweise zerstört werden. Dies ist wiederum sehr leicht mit Hilfe eines Lasers zu erreichen, mit dem die entsprechenden Strukturen beleuchtet werden.

Werden die Unterbereiche jeweils nur teilweise zerstört, so stellt sich ein Graustufeneffekt ein, d. h. die negative Information, die in den teilweise zerstörten Unterbereichen enthalten ist, erscheint in einer Grauabstufung.

Das erfindungsgemäße Verfahren kann durchgeführt werden, in dem zunächst das mehrkanalige Hologramm vollständig fertiggestellt wird und nachträglich die entsprechenden Unterbereiche in ihren optischen Eigenschaften in der beanspruchten Weise verändert werden. Abweichend hiervon ist es ebenso möglich, daß zunächst ein Kanal des Hologramms bei entsprechender Maskierung aufgenommen wird und direkt im Anschluß daran, z. B. mit Hilfe eines Lasers, die Unterbereiche des zu diesem Kanal gehörigen Bereichen in ihren optischen Eigenschaften verändert werden, daß sie an der holographischen Rekonstruktion nicht mehr teilnehmen können.

Ein erfindungsgemäßes optisches Merkmal läßt sich auch mit einem wie folgt ausgestalteten erfindungsgemäßem Verfahren herstellen. Zunächst wird eine holographische Struktur hergestellt, die einen Kanal des zumindest zweikanaligen Hologrammes unter Lichteinfall rekonstruiert. Dieses Hologramm kann auf bekannte Art und Weise belichtet, entwickelt und fixiert werden. Zum Beispiel kann es sich dabei um eine Prägehologrammstruktur mit einer Metallisierungsschicht handeln. Es sind jedoch auch andere Hologrammtypen verwendbar, unter anderem z.B. ein Volumenhologramm. Die optischen Eigenschaften eines Unterbereiches der ersten Hologrammstruktur werden in Form eines ersten Musters verändert, wie oben bereits beschrieben.

Eine zweite holographische Struktur wird auf einer oder mehreren Teilregionen eines ansonsten transparenten Trägermateriales hergestellt. Diese zweite Hologrammstruktur ist so ausgestaltet, daß sie unter Lichteinfall den zweiten Kanal des zumindest zweikanaligen Hologrammes rekonstruiert. Dabei kann zum Beispiel die zweite Hologrammstruktur zunächst auf einem transparenten Trägermaterial erzeugt werden. Wiederum kann es sich zum Beispiel um ein metallisiertes Prägehologramm handeln. Ein Teil der Metallisierung wird entfernt, so daß an diesen Stellen keine holographische Rekonstruktion stattfindet und das Material transparent ist. Selbstverständlich können die teilweise transparenten Regionen auch bereits bei der Herstellung der zweiten Hologrammstruktur freigelassen werden oder auf andere Weise transparent gemacht werden. Auch die zweite Hologrammstruktur kann einen anderen Hologrammtypus umfassen, z.B. ein Volumenhologramm.

Die optischen Eigenschaften eines Unterbereiches der zweiten Hologrammstruktur werden in Form eines zweiten Musters verändert.

Das derartig präparierte Trägermaterial, das teilweise transparent ist und teilweise mit der zweiten Hologrammstruktur belegt ist, wird auf die erste Hologrammstruktur aufgebracht, zum Beispiel geklebt oder geprägt. In den transparenten Regionen des Trägermateriales der zweiten Hologrammstruktur ist somit die erste Hologrammstruktur sichtbar.

Während in den nicht transparenten Regionen des Trägermateriales für die zweite Hologrammstruktur bei Lichteinfall der zweite Kanal des Hologramms rekonstruiert wird, ist durch die transparenten Regionen des Trägermateriales für die zweite Hologrammstruktur die erste Hologrammstruktur sichtbar, die den ersten Kanal bei Lichteinfall rekonstruiert.

Im ersten Kanal ist zusätzlich die Information gespeichert, die durch Veränderung der optischen Eigenschaften eines Unterbereiches der ersten Hologrammstruktur gespeichert ist. In analoger Weise ist im zweiten Kanal die Information sichtbar, die durch Veränderung der optischen Eigenschaften der Unterbereiche der zweiten holographischen Struktur gespeichert worden ist.

Auf diese Weise entsteht ein erfindungsgemäßes optisches Merkmal.

Soll ein mehrkanaliges Hologramm eingesetzt werden, werden die Schritte zur Herstellung und Applikation der zweiten Hologrammstruktur entsprechend oft wiederholt.

Die Unterbereiche der jeweiligen holographischen Strukturen können am Ende des gesamten Prozesses in ihren optischen Eigenschaften in gewünschter Weise verändert werden. Besonders vorteilhaft ist es jedoch, wenn die einzelnen Unterbereiche der holographischen Strukturen bereits vor dem Aufbringen der weiteren holographischen Struktur in ihren optischen Eigenschaften verändert werden.

Auf diese Weise kann jede einzelne holographische Struktur ohne besondere Anforderungen an die Ausrichtung in Unterbereichen bezüglich ihrer optischen Eigenschaften verändert werden und erst im Anschluß daran die einzelnen holographischen Strukturen aufeinander appliziert werden. Ein solches Verfahren hat den Vorteil, daß bei der Veränderung der optischen Eigenschaften der Unterbereiche einer holographischen Struktur nicht auf das Vorhandensein einer weiteren holographischen Struktur Rücksicht genommen werden muß.

Bei einer besonders vorteilhaften Ausgestaltung des Verfahrens wird die erste Hologrammstruktur ganzflächig erzeugt. Ein solches Verfahren bietet den Vorteil, daß die erste Hologrammstruktur ohne besondere Beachtung der räumlichen Ausrichtung erzeugt werden kann. Das Trägermaterial mit der zweiten Hologrammstruktur, das teilweise transparent ist, kann dann ebenfalls ohne besondere Beachtung der Lage bezüglich der ersten Hologrammstruktur aufgebracht werden. Dadurch wird der Herstellungsprozeß stark vereinfacht.

Um den Kontrast zwischen den Bereichen zu erhöhen, die an der holographischen Rekonstruktion teilnehmen und den Unterbereichen, für die dies nicht gilt, kann die Struktur auf einem dunklen Hintergrund aufgebracht werden.

Bei einer anderen vorteilhaften Ausgestaltung des Verfahrens wird die Struktur auf einem reflektierenden Hintergrund aufgebracht, bzw. rückseitig reflektierend, vorzugsweise metallisch, beschichtet, um einen Aufhellungseffekt zu erreichen.

Bei Einsatz von oben beschriebenen metallisierten Prägehologrammen, also Prägehologrammen mit einer metallisierten geprägten Seite, entsteht so eine zumindest teilweise doppelseitige Metallisierung.

Abweichend von den oben beschriebenen Verfahren können die erfindungsgemäßen optischen Merkmale auch vollständig computergeneriert werden.

Eine einfache Ausgestaltung eines erfindungsgemäßen optischen Merkmals umfaßt ein zweikanaliges Hologramm, das die Ansicht aus zwei verschiedenen Blickrichtungen ermöglicht und für diese Blickrichtungen verschiedene Informationen darstellt. Je nach Anforderung und Wünschen ist natürlich auch eine Vielfachkanalaufnahme möglich, die verschiedene Information für eine entsprechend große Anzahl von Kanälen darstellen kann, wenn die Blickrichtungen entsprechend eingestellt sind.

Mit dem erfindungsgemäßen Verfahren können z. B. die zumindest zweikanaligen Hologrammstrukturen in Massenproduktion hergestellt werden. Sie können dann in bzw. auf die Wertdokumente aufgebracht werden und erst zu einem späteren Zeitpunkt, z. B. bei der Ausgabe eines Ausweisdokumentes, individualisiert werden, indem z. B. eine Identifizierungsnummer nachträglich eingebracht wird. Insofern eignet sich das erfindungsgemäße Verfahren besonders zur nachträglichen Individualisierung von mit Sicherheitsmerkmalen versehenen Dokumenten.

Ein optisches Merkmal gemäß der Erfindung kann z. B. Teil eines Wertdokuments, einer Banknote oder einer Plastikkarte, z. B. einer Kreditkarte sein. Während z. B. die holographische Belichtung für das Produkt allgemein gleich ist, kann die individuell nachträglich einzutragende Information für jedes individuelle Produkt verschieden sein, z. B. dem Namen oder einer Identifizierungsnummer des Besitzers entsprechen.

Besonders geeignet ist das erfindungsgemäße Verfahren z. B. zur nachträglichen Individualisierung von holographischen Strukturen durch Einschreiben einer Nummer oder eines anderen Identifizierungsmerkmals aus einer Blickrichtung. Das Identifizierungsmerkmal, z. B. eine Registernummer, läßt sich dann nur aus einer Blickrichtung erkennen. Aus einer anderen Blickrichtung kann ein anderes Bild gezeigt werden, das auf die gleiche Weise hergestellt worden ist.

Je nach gewünschter Anwendung kann die nachträgliche Individualisierung dabei die Veränderung der optischen Eigenschaften der Unterbereiche nur eines oder mehrerer Bereiche, die der Rekonstruktion in die jeweiligen Blickrichtungen dienen, umfassen. Die Veränderung der Unterbereiche derjenigen Bereiche, die der Rekonstruktion in den anderen Blickrichtungen dienen, können gegebenenfalls zuvor, während des Herstellungsprozesses, in ihren optischen Eigenschaften verändert werden.

Im folgenden wird eine Ausführungsform eines erfindungsgemäßen optischen Merkmals und ein Verfahren zu dessen Herstellung beschrieben. Dabei zeigt
- Fig. 1: einen Schritt während der Herstellung eines erfindungsgemäßen optischen Merkmals in schematischer Perspektivansicht,
- Fig. 2: einen zweiten Schritt während der Herstellung eines erfindungsgemäßen optischen Merkmals in schematischer Perspektivansicht, und
- Fig. 3: in schematischer Darstellung die Geometrie bei der Betrachtung eines erfindungsgemäßen optischen Merkmals.

Die gezeigte Ausführung stellt Vorrichtung und Verfahren für den besonderen Fall eines Zweikanalhologramms dar.

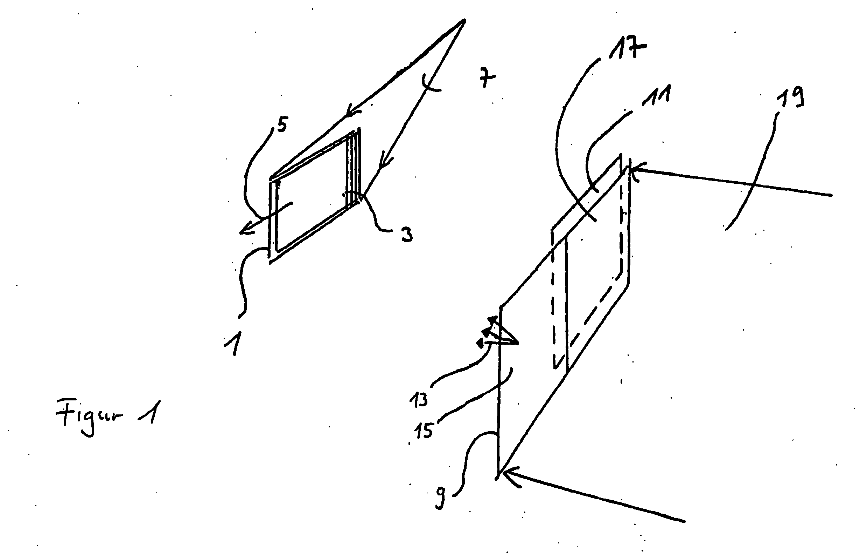

In Fig. 1 ist das holographische Aufzeichnungsmaterial mit 1 bezeichnet. Davor befindet sich ein Linsenraster 3, das mit einem Referenzstrahl 7 beleuchtet wird. Gleichzeitig wird eine Mattscheibe 9 mit Objektlicht 19 beleuchtet. Die Mattscheibe 9 erzeugt dabei diffuses Licht 13. Mit 11 ist eine Blende bezeichnet, die einen Teil 17 der Mattscheibe 9 abdeckt, während das Objektlicht 19 durch den Teil 15 der Mattscheibe 9 treten kann.

Während der Belichtung ist das Linsenraster 3 in einer Stellung festgehalten und die Gesamtstruktur wird gleichzeitig mit einem Referenzstrahl 7 zur Erzeugung eines holographischen Musters belichtet. Dabei entsteht in bekannter Weise durch die Interferenz von Referenzstrahl und Objektlicht eine holographische Belichtung.

Durch das Linsenraster 3 vor dem holographischen Aufzeichnungsmaterial 1 wird erreicht, daß nur ein streifenförmiges Muster aus der Richtung des Mattscheibenteils 15 belichtet wird. Nach dieser Belichtung wird das Linsenraster 3 versetzt, so daß die bisher nicht belichteten Bereiche der holographischen Struktur 1 freigelegt sind. Gleichzeitig wird die Blende 11 vor den Bereich 15 der Mattscheibe 9 verschoben, so daß der Bereich 17 der Mattscheibe 9 freigegeben wird. Bei Beleuchtung mit dem Objektlicht 19 wird dann diffuses Objektlicht von dem Bereich 17 der Mattscheibe 9 erzeugt. Bei gleichzeitiger Beleuchtung der holographischen Struktur 1 mit dem davorliegenden versetzten Linienraster 3 wird dann in den nun freiliegenden Bereichen des holographischen Materials 1 das Objektlicht aus dem nun freiliegenden Bereich 17 der Mattscheibe 9 mit dem Referenzstrahl 7 interferieren und ein entsprechendes holographisches Muster auf dem holographischen Material 1 aufzeichnen. Die Verschiebung des Linienrasters 3 zwischen den zwei Belichtungsschritten ist mit 5 bezeichnet.

Das belichtete holographische Material 1 wird dann in gewohnter Weise entwickelt. Es kann z.B. als Prägehologramm in Massenproduktion hergestellt werden und auf ein Ausweisdokument aufgebracht werden. Wenn dieser dann für eine Person individualisiert werden soll, wird in einem weiteren Arbeitsschritt das optische Merkmal fertiggestellt.

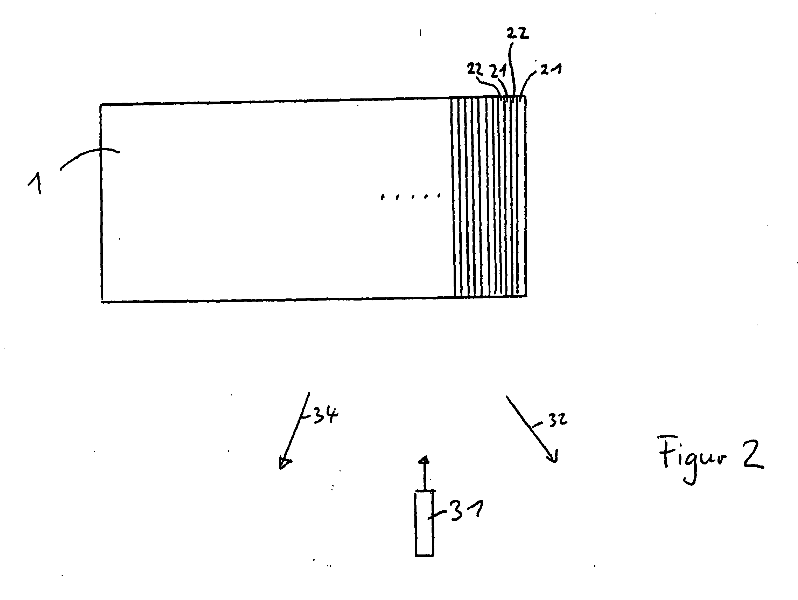

Der dazu notwendige weitere Schritt bei der Herstellung des erfindungsgemäßen optischen Merkmales ist in Fig. 2 schematisch dargestellt.

Das belichtete und entwickelte holographische Aufzeichnungsmaterial 1 umfaßt die einzelnen Bereiche 21 bzw. 22 zur Rekonstruktion des Lichts in zwei unterschiedlichen Richtungen. Die Bereiche 21 und 22 bestehen jeweils aus streifenförmigen Teilen, die alternierend angeordnet sind.

Der Bereich 21 kann z. B. das Licht in die mit 32 bezeichnete Richtung rekonstruieren, wenn Licht auf den Bereich 21 fällt. Andererseits kann z. B. das Licht, das auf den Bereich 22 fällt, in Richtung 34 rekonstruiert werden. Bei dem gezeigten Beispiel, bei dem in Fig. 1 holographisch eine Mattscheibe aus verschiedenen Richtungen abgebildet wird, wird dementsprechend das Bild einer Mattscheibe in die entsprechenden Richtungen rekonstruiert.

Die alternierend angeordneten Teile der Bereiche 21 und 22 erstrecken sich dabei über die gesamte Breite des holographischen Aufzeichnungsmaterials 1. Der Übersichtlichkeit halber sind in Fig. 2 jedoch nur einige der Teile angedeutet. Zur Herstellung der Information, die in negativer Weise in den Unterbereichen der einzelnen Bereiche gespeichert werden soll, wird wie folgt verfahren. Das holographische Aufzeichnungsmaterial 1 wird mit einer nicht gezeigten Lichtquelle beleuchtet, die derart fokussiert ist, daß sie nur einen einzelnen Teil eines Bereiches beleuchtet, im gezeigten Beispiel also nur einen Streifen. Mit Hilfe eines ebenfalls nicht gezeigten Detektors wird dann festgestellt, in welche Richtung dieser Teil das Licht rekonstruiert. Auf diese Weise kann festgestellt werden, zu welchem Bereich 21 oder 22 der beleuchtete Streifen gehört.

Mit einer stärkeren Lichtquelle, z. B. mit einem Laser 31, wird dann in diesem Streifen ein gewünschter Unterbereich zerstört bzw. geschwärzt. Dazu kann z. B. eine Computerdatei abgefragt werden.

Im folgenden wird ein anderer Streifen mit Hilfe der Lichtquelle beleuchtet und festgestellt, in welcher Richtung die Rekonstruktion stattfindet. Wiederum kann festgelegt werden, ob der beleuchtete Teil zu dem Bereich 21 oder zu dem Bereich 22 gehört, indem die Rekonstruktionsrichtung ausgewertet wird. Wiederum wird ein entsprechender gewünschter Unterbereich des Streifens mit Hilfe des Lasers 31 zerstört bzw. geschwärzt.

In Fig. 2 ist der Bereich, der im Schritt der Fig. 1 für die spätere Rekonstruktion des linken Kanals belichtet wurde, mit 21, der des rechten Kanals mit 22 bezeichnet.

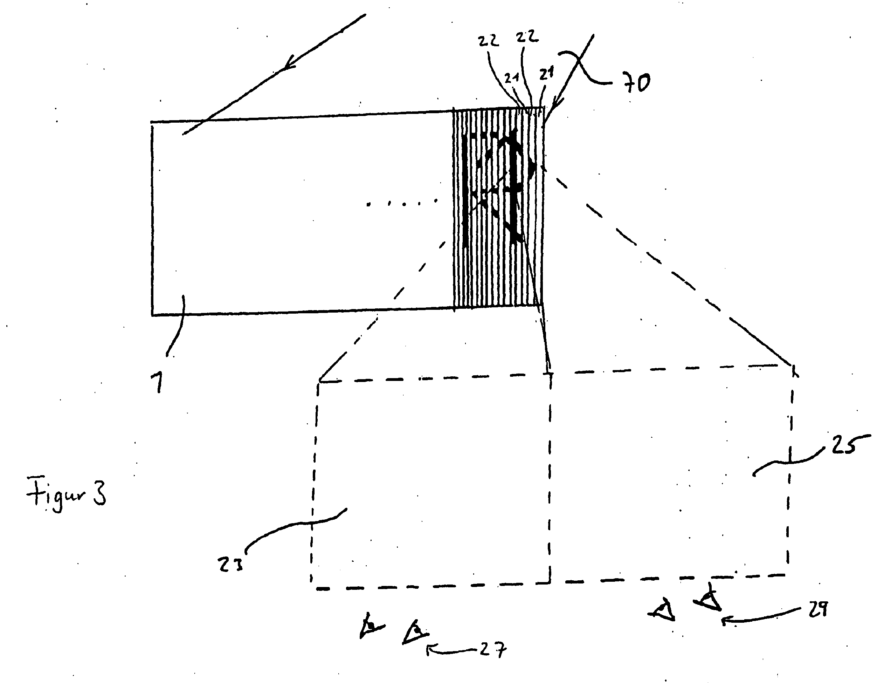

In Fig. 3 ist schematisch dargestellt, wie ein erfindungsgemäßes Merkmal bei der Betrachtung wirkt. Die Struktur ist nur im rechten Teil des Hologramms 1 dargestellt. Das holographische belichtete und entwickelte Material 1, in das die Information mit Hilfe des Lasers eingeschrieben worden ist, wird vom Rekonstruktionsstrahl 70 beleuchtet. Bei Betrachtung aus der Blickrichtung des rechten Kanals 25, angedeutet durch das Augenpaar 29, ist die Information des rechten Kanals sichtbar. Man sieht das holographisch rekonstruierte Bild des rechten Teils 17 der Mattscheibe 9. In jenen Bereichen 22 des holographischen Materials 1, die zur holographischen Rekonstruktion des rechten Kanals zuständig sind, ist mit dem Laser 31 beim gezeigten Beispiel z. B. die Information "R" eingeschrieben worden. Bei Betrachtung aus der rechten Blickrichtung ist also die Information "R" sichtbar, da hier nicht holographisch rekonstruiert wird. Ist das Hologramm vor einem schwarzen Hintergrund angeordnet, so läßt sich dieser Effekt sehr kontrastreich darstellen.

Blickt man jedoch aus der Richtung des linken Kanals 23, angedeutet durch das Augenpaar 27, auf das holographische Material 1 während der Beleuchtung mit dem Rekonstruktionslicht 70, so sieht man die holographische Reproduktion des linken Teils 15 der Mattscheibe 9. In die Bereiche 21 des holographischen Materials 1, die zur holographischen Reproduktion dieses Teils der Mattscheibe belichtet worden sind, ist mit Hilfe des Lasers beim gezeigten Beispiel die Information "1" eingeschrieben worden. Man sieht also bei dieser Blickrichtung die holographische Rekonstruktion des linken Teils der Mattscheibe 9 mit der Information "1".

Die schwarzen Bereiche "R" bzw. "1" sind also die informationstragenden Unterbereiche.

Ist während der Aufzeichnung der verschiedenen Kanäle des Hologramms gemäß der Fig. 1 nicht eine Mattscheibe eingesetzt, sondern ein Bild, so ist dieses Bild holographisch reproduzierbar, wobei je nach Blickrichtung die in den rechten oder linken Kanal eingeschriebene Information in dem Bild sichtbar ist.

Gezeigt ist ein Beispiel, bei dem die holographische Struktur mit einem Rekonstruktionsstrahl 70 beleuchtet wird. Bei entsprechender Auswahl des Hologrammtypus ist auch die Beleuchtung mit Weißlicht möglich.

Die gespeicherte Information kann durch Kippen des Merkmals in verschiedenen Richtungen ausgelesen werden. Selbstverständlich kann durch eine entsprechende maschinelle Einrichtung, die entsprechende optische Detektoren bzw. Kameras in den Blickrichtungen positioniert hat, auch eine maschinelle Auswertung bzw. auch digitale Bildverarbeitung zur Echtheitsverifikation denkbar sein.

Wird für jeden Kanal des zumindest zweikanaligen Hologramms, das in Fig. 1 hergestellt wird, ein Regenbogenhologramm eingesetzt, so läßt sich zusätzlich ein Farbeffekt erzeugen. Ebenso ist ein solcher Farbeffekt durch ein mehrfarbiges Volumenhologramm erreichbar.

Bei den beschriebenen Ausführungsformen sind die einzelnen Teile der Bereiche 21, 22 streifenförmig angeordnet. Die Teile können jedoch beliebige Form haben und über das gesamte Hologrammaufzeichnungsmaterial 1 in zufälliger Weise verteilt sein.

Die Blickrichtungen 23 und 25 der Fig. 3 können derart sein, daß sie den Blickrichtungen für jeweils ein Auge eines Betrachters entsprechen, abweichend von der in Fig. 3 gezeigten Ausführungsform. So läßt sich eine stereoskopische Betrachtung der holographischen Information, die in den Bereichen 21 und 22 enthalten ist, erreichen.

Das erfindungsgemäße optische Merkmal und das erfindungsgemäße Verfahren zu dessen Herstellung ist sehr einfach durchzuführen und erhöht die Fälschungssicherheit aufgrund des holographischen Herstellungsprozesses. Zudem ermöglicht es eine einfache nachträgliche Individualisierung einer bereits fertiggestellten holographischen Struktur.

Eine andere Ausgestaltung des erfindungsgemäßen Verfahrens zur Herstellung eines erfindungsgemäßen optischen Merkmales, wie es zum Beispiel in Figur 3 sichtbar ist, wird wie folgt durchgeführt. Zunächst wird ganzflächig eine erste holographische Struktur hergestellt, die bei Lichteinfall zur Rekonstruktion des ersten Kanales eines zum Beispiel zweikanaligen Hologrammes dienen soll. Es kann sich dabei zum Beispiel um ein Prägehologramm mit einer Metallisierungsschicht handeln.

In diese Prägehologrammschicht wird entweder vor oder nach Metallisierung mit Hilfe eines Lasers die Information in Form eines "R" eingebracht, zum Beispiel durch Zerstörung mit einem Laserstrahl. Wird diese erste Hologrammstruktur beleuchtet, so entsteht in Richtung der Blickrichtung des Kanals des Hologramms also das im Hologramm gespeicherte Bild, wobei "R" ausgespart wird, da es an der holographischen Rekonstruktion nicht teilnimmt.

Unabhängig davon wird eine zweite holographische Struktur hergestellt, die zur Rekonstruktion des zweiten Kanales des zumindest zweikanaligen Hologramms dienen soll. Dies geschieht auf einem ansonsten transparenten Trägermaterial zum Beispiel ebenfalls wieder als Prägehologramm mit einer Metallisierungsschicht. In die zweite holographische Struktur wird wiederum mit Hilfe eines Lasers die Information "1" eingebracht, zum Beispiel durch Zerstörung der holographischen Struktur durch den Laserstrahl. Wird die zweite Hologrammstruktur beleuchtet, so rekonstruiert sie in der Blickrichtung des zweiten Kanales die in dem Hologramm gespeicherte Information. An der Rekonstruktion haben jedoch die Bereiche, die der "1" entsprechen, keinen Anteil. Die Information "1" ist also wiederum als Negativinformation gespeichert.

Die so hergestellte zweite metallisierte Prägehologrammstruktur wird in Teilregionen demetallisiert, zum Beispiel durch einen Ätzprozess mit bekannten Maskierungstechniken. Es verbleibt in diesen Teilregionen das transparente Trägermaterial der zweiten Hologrammstruktur. Die so nun teilweise demetallisierte Prägehologrammstruktur wird auf die erste Hologrammstruktur aufgeprägt. Durch die transparenten Regionen wird die erste Hologrammstruktur sichtbar. Auf diese Weise läßt sich ebenfalls ein optisches Merkmal, wie es in Figur 3 dargestellt ist, herstellen. Selbstverständlich lassen sich auch andere Formen und mehrkanalige Hologramme auf diese Weise produzieren.

## Patentansprüche

1. Optisches Merkmal, insbesondere für Wertdokumente, **gekennzeichnet durch** zumindest ein wenigstens zweikanaliges Hologramm (1) zur holographischen Rekonstruktion verschiedener Bilder aus verschiedenen Blickrichtungen, bei dem den unterschiedlichen Kanälen verschiedene Bereiche (21, 22) des Hologramms zugeordnet sind und die das jeweilige Bild unter Lichteinfall (70) rekonstruierenden Bereiche (21, 22) des Hologramms (1) Unterbereiche aufweisen, die an der Bildrekonstruktion nicht teilnehmen.

2. Optisches Merkmal nach Anspruch 1, bei dem die Unterbereiche derart angeordnet sind, daß sich bei der holographischen Rekonstruktion des Bereiches (21, 22), zu dem der Unterbereich gehört, ein erkennbares Bildmuster oder erkennbare Information ergibt.

3. Optisches Merkmal nach einem der Ansprüche 1 oder 2, bei dem die Unterbereiche Aussparungen in den das jeweilige Bild unter Lichteinfall rekonstruierenden Bereichen (21, 22) umfassen.

4. Optisches Merkmal nach einem der Ansprüche 1 bis 3, bei dem die Unterbereiche nachträglich mit einem Laser in ihren optischen Eigenschaften veränderte Teile des jeweiligen Bereiches (21, 22), zu dem der betreffende Unterbereich gehört, umfassen.

5. Optisches Merkmal nach einem der Ansprüche 1 bis 4, wobei das zumindest eine Hologramm (1) diffuse Objektstrahlen aus verschiedenen Richtungen holographisch rekonstruiert.

6. Optisches Merkmal nach einem der Ansprüche 1 bis 5, wobei das zumindest eine Hologramm (1) gerichtete Objektstrahlen aus verschiedenen Richtungen holographisch rekonstruiert.

7. Optisches Merkmal nach einem der Ansprüche 1 bis 6, bei dem das zumindest eine Hologramm (1) eine Prägehologrammstruktur umfaßt.

8. Optisches Merkmal nach einem der Ansprüche 1 bis 7, bei dem die Bereiche (21, 22) zur Rekonstruktion in verschiedenen Blickrichtungen jeweils farbgetrennte Regenbogenhologramme umfassen.

9. Optisches Merkmal nach einem der Ansprüche 1 bis 8, bei dem die Bereiche (21, 22) zur Rekonstruktion in verschiedenen Blickrichtungen jeweils, vorzugsweise mehrfarbige, Volumenhologramme umfassen.

10. Optisches Merkmal nach einem der Ansprüche 1 bis 9, bei dem die Bereiche (21, 22) zur Rekonstruktion in verschiedenen Blickrichtungen jeweils mehrere linienförmige, vorzugsweise alternierend angeordnete Teile umfassen.

11. Optisches Merkmal nach einem der Ansprüche 1 bis 10, bei dem die Bereiche jeweils mehrere Teile mit jeweils mindestens einem Pixel umfassen.

12. Optisches Merkmal nach Anspruch 11, bei dem die Bereiche zur holographischen Rekonstruktion in verschiedenen Blickrichtungen jeweils mehrere Teile mit mindestens einem Pixel je Grundfarbe enthalten.

13. Optisches Merkmal nach einem der Ansprüche 1 bis 12, bei dem das mindestens eine Hologramm (1) rückseitig reflektierend ausgestaltet ist, vorzugsweise eine rückseitige metallische Beschichtung umfaßt.

14. Optisches Merkmal nach einem der Ansprüche 1 bis 13, bei dem die Unterbereiche Schwärzungen in den das jeweilige Bild unter Lichteinfall rekonstruierenden Bereichen (21, 22) umfassen.

15. Optisches Merkmal nach einem der Ansprüche 1 bis 14, bei dem ein zweikanaliges Hologramm zur holographischen Rekonstruktion zweier Bilder aus verschiedenen Blickrichtungen zum Einsatz kommt, das derart ausgestaltet ist, daß bei der Betrachtung ein stereoskopisches Bild erzeugt wird.

16. Optisches Merkmal nach einem der Ansprüche 1 bis 15, bei dem das mindestens eine Hologramm (1) vor einem dunklen Hintergrund angeordnet ist.

17. Verfahren zur Erzeugung eines optischen Merkmals, insbesondere für Wertdokumente, **gekennzeichnet durch** folgende Schritte:
a) Herstellen eines zumindest zweikanaligen Hologramms (1), wobei die Information für die einzelnen Kanäle in verschiedenen Bereichen des Hologramms (1) aufgezeichnet werden,
b1) Verändern der optischen Eigenschaften eines Unterbereiches eines Bereiches zur Rekonstruktion in eine Blickrichtung in Form eines Musters,
b2) Wiederholen des Schrittes b1) für jeden Kanal mit gegebenenfalls verschiedenen Mustern.

18. Verfahren nach Anspruch 17, bei dem im Schritt a) die verschiedenen Bereiche (21, 22) zur Aufzeichnung für verschiedene Kanäle bei der Aufzeichnung des Hologramms (1) durch unterschiedliche Maskierung des holographischen Aufzeichnungsmaterials (1) mit einer Maske (3) im Objektlichtstrahl oder im Referenzlichtstrahl ausgewählt werden.

19. Verfahren nach Anspruch 18, bei dem zur Maskierung eine Linienmaske (3) eingesetzt wird.

20. Verfahren nach Anspruch 19, bei dem zum Wechsel der Bereiche (21, 22) zur Aufzeichnung verschiedener Kanäle die Linienmaske (3) verschoben wird.

21. Verfahren nach einem der Ansprüche 17 bis 20, wobei
a1) zunächst ein erster Kanal des Hologramms (1) aufgenommen wird und dann für diesen Kanal der Schritt b1) durchgeführt wird, und
a2) Schritt a1) für die anderen Kanäle wiederholt wird.

22. Verfahren zur Erzeugung eines optischen Merkmales, insbesondere für Wertdokumente, **gekennzeichnet durch** folgende Schritte:
α1) Herstellen einer ersten holographischen Struktur, die unter Lichteinfall einen ersten Kanal eines zumindest zweikanaligen Hologramms (1) rekonstruiert,
α2) Verändern der optischen Eigenschaften eines Unterbereiches der ersten holographischen Struktur in Form eines ersten Musters,
β1) Herstellung einer zweiten holographischen Struktur, die unter Lichteinfall einen zweiten Kanal des zumindest zweikanaligen Hologramms (1) rekonstruiert, auf einer bzw. mehreren Teilregionen eines ansonsten transparenten Trägermateriales,
β2) Verändern der optischen Eigenschaften eines Unterbereiches der zweiten holographischen Struktur in Form eines zweiten Musters,
γ) Aufbringen des Trägermateriales der zweiten holographischen Struktur auf der ersten holographischen Struktur.

23. Verfahren nach Anspruch 22, bei dem die Schritte α2) bzw. β2) vor dem Schritt γ) durchgeführt werden.

24. Verfahren nach einem der Ansprüche 22 oder 23, bei dem die erste Hologrammstruktur ganzflächig aufgebracht wird.

25. Verfahren nach einem der Ansprüche 22 bis 24, bei dem die holographischen Strukturen als Prägehologrammstrukturen ausgebildet werden.

26. Verfahren nach Anspruch 25, bei dem die Prägehologrammstrukturherstellungsschritte einen Metallisierungsschritt umfassen und während Schritt β1) zunächst eine metallisierte Prägehologrammstruktur zur Rekonstruktion des zweiten Kanales hergestellt wird und dann ein Teil der Metallisierung entfernt wird, so daß der zweite Kanal nur vom verbleibenden Teil der zweiten Hologrammstruktur rekonstruiert wird und der Teil, von dem die Metallisierung entfernt wurde, transparent ist.

27. Verfahren nach Anspruch 26, bei dem Schritt β2) vor dem teilweisen Entfernen der Metallisierung durchgeführt wird.

28. Verfahren nach einem der Ansprüche 22 bis 27, bei der zur Herstellung eines mehr als zweikanaligen Hologramms die Schritte β1), β2) und γ) für jeden weiteren Kanal wiederholt werden.

29. Verfahren nach einem der Ansprüche 17 bis 28, bei dem die in ihren optischen Eigenschaften zu verändernden Unterbereiche der einzelnen Bereiche (21, 22) mit einem Laser (31, 33) in den optischen Eigenschaften verändert werden.

30. Verfahren nach Anspruch 29, bei dem die Unterbereiche der holographisch ein Bild rekonstruierenden Bereiche (21, 22) mit Hilfe des Lasers zumindest teilweise zerstört oder geschwärzt werden.

31. Verfahren nach einem der Ansprüche 17 bis 30, bei dem die in ihren optischen Eigenschaften zu veränderten Unterbereiche der einzelnen Bereiche (21, 22) überdruckt werden, so daß sie an der holographischen Rekonstruktion nicht mehr teilnehmen können.

32. Verfahren nach einem der Ansprüche 17 bis 31 bei dem das Hologramm (1) auf einer dunklen Oberfläche befestigt wird.

33. Verfahren nach einem der Ansprüche 17 bis 32, bei dem das Hologramm (1) auf einer reflektierenden Oberfläche befestigt wird.

34. Verfahren nach einem der Ansprüche 17 bis 33, bei dem das Hologramm (1) rückseitig reflektierend, vorzugsweise metallisch, beschichtet wird.

35. Optisches Merkmal nach einem der Ansprüche 1 bis 15, bei dem das mindestens eine Hologramm (1) vor einem reflektierenden Hintergrund angeordnet ist.

36. Datenträger, insbesondere Wertdokument, mit zumindest einem optischen Merkmal nach einem der Ansprüche 1 bis 16 oder nach Anspruch 35.

## Claims

1. An optical feature, in particular for value documents, **characterized by** at least one at least dual-channel hologram (1) for the holographic reconstruction of different images from different viewing directions, wherein different regions (21, 22) of the hologram are associated with the different channels and the regions (21, 22) of the hologram (1) reconstructing the particular image under incident light (70) have sub-regions that do not take part in the image reconstruction.

2. The optical feature according to claim 1, wherein the sub-regions are disposed such that a recognizable image pattern or recognizable information results upon the holographic reconstruction of the region (21, 22) to which the sub-region belongs.

3. The optical feature according to either of claims 1 and 2, wherein the sub-regions comprise gaps in the regions (21, 22) reconstructing the particular image under incident light.

4. The optical feature according to any of claims 1 to 3, wherein the sub-regions comprise parts of the particular region (21, 22) to which the relevant sub-region belongs, said parts having been subsequently changed in their optical properties by a laser.

5. The optical feature according to any of claims 1 to 4, wherein the at least one hologram (1) holographically reconstructs diffuse object beams from different directions.

6. The optical feature according to any of claims 1 to 5, wherein the at least one hologram (1) holographically reconstructs directional object beams from different directions.

7. The optical feature according to any of claims 1 to 6, wherein the at least one hologram (1) comprises an embossed hologram structure.

8. The optical feature according to any of claims 1 to 7, wherein the regions (21, 22) for reconstruction in different viewing directions each comprise color-separated rainbow holograms.

9. The optical feature according to any of claims 1 to 8, wherein the regions (21, 22) for reconstruction in different viewing directions each comprise, preferably multicolored, volume holograms.

10. The optical feature according to any of claims 1 to 9, wherein the regions (21, 22) for reconstruction in different viewing directions each comprise a plurality of linear, preferably alternatingly disposed, parts.

11. The optical feature according to any of claims 1 to 10, wherein the regions each comprise a plurality of parts each having at least one pixel.

12. The optical feature according to claim 11, wherein the regions for the holographic reconstruction in different viewing directions each contain a plurality of parts having at least one pixel per primary color.

13. The optical feature according to any of claims 1 to 12, wherein the at least one hologram (1) is designed to be reflective on the back, preferably comprising a metallic coating on the back.

14. The optical feature according to any of claims 1 to 13, wherein the sub-regions comprise blackenings in the regions (21, 22) reconstructing the particular image under incident light.

15. The optical feature according to any of claims 1 to 14, wherein a dual-channel hologram for the holographic reconstruction of two images from different viewing directions is used that is designed such that a stereoscopic image is produced upon viewing.

16. The optical feature according to any of claims 1 to 15, wherein the at least one hologram (1) is disposed against a dark background.

17. A method for producing an optical feature, in particular for value documents, **characterized by** the following steps:
a) producing an at least dual-channel hologram (1), the information for the individual channels being recorded in different regions of the hologram (1),
b1) changing the optical properties of a sub-region of a region for reconstruction in one viewing direction in the form of a pattern,
b2) repeating step b1) for each channel with optionally different patterns.

18. The method according to claim 17, wherein in step a) the different regions (21, 22) for recording for different channels are selected by different masking of the holographic recording material (1) with a mask (3) in the object light beam or in the reference light beam upon the recording of the hologram (1).

19. The method according to claim 18, wherein a line mask (3) is used for masking.

20. The method according to claim 19, wherein the line mask (3) is displaced to change the regions (21, 22) for recording different channels.

21. The method according to any of claims 17 to 20, wherein
a1) a first channel of the hologram (1) is first recorded and step b1) is then carried out for said channel, and
a2) step a1) is repeated for the other channels.

22. A method for producing an optical feature, in particular for value documents, **characterized by** the following steps:
α1) producing a first holographic structure which reconstructs a first channel of an at least dual-channel hologram (1) under incident light;
α2) changing the optical properties of a sub-region of the first holographic structure in the form of a first pattern,
β1) producing a second holographic structure which reconstructs a second channel of the at least dual-channel hologram (1) under incident light, on one or more partial regions of an otherwise transparent supporting material;
β2) changing the optical properties of a sub-region of the second holographic structure in the form of a second pattern,
γ) applying the supporting material of the second holographic structure to the first holographic structure.

23. The method according to claim 22, wherein steps α2) and β2) are carried out before step γ).

24. The method according to either of claims 22 and 23, wherein the first hologram structure is applied all over.

25. The method according to any of claims 22 to 24, wherein the holographic structures are formed as embossed holographic structures.

26. The method according to claim 25, wherein the embossed hologram structure producing steps comprise a metallizing step and, during step β1), a metallized embossed hologram structure for reconstructing the second channel is first produced and then a part of the metallization is removed so that the second channel is only reconstructed by the remaining part of the second hologram structure and the part from which the metallization was removed is transparent.

27. The method according to claim 26, wherein step β2) is carried out before the partial removal of the metallization.

28. The method according to any of claims 22 to 27, wherein steps β1), β2) and γ) are repeated for each further channel for producing a more than dual-channel hologram.

29. The method according to any of claims 17 to 28, wherein the sub-regions of the individual regions (21, 22) to be changed in their optical properties are changed in the optical properties by a laser (31, 33).

30. The method according to claim 29, wherein the sub-regions of the regions (21, 22) holographically reconstructing an image are at least partly destroyed or blackened with the aid of the laser.

31. The method according to any of claims 17 to 30, wherein the sub-regions of the individual regions (21, 22) to be changed in their optical properties are printed over so that they can no longer take part in the holographic reconstruction.

32. The method according to any of claims 17 to 31, wherein the hologram (1) is fastened to a dark surface.

33. The method according to any of claims 17 to 32, wherein the hologram (1) is fastened to a reflective surface.

34. The method according to any of claims 17 to 33, wherein the hologram (1) is coated reflectively, preferably metallically, on the back.

35. The optical feature according to any of claims 1 to 15, wherein the at least one hologram (1) is disposed against a reflective background.

36. A data carrier, in particular value document, having at least one optical feature according to any of claims 1 to 16 or according to claim 35.

## Revendications

1. Caractéristique optique, en particulier pour des papiers de valeur, **caractérisée par** au moins un hologramme à au moins deux voies (1) pour la reconstitution holographique de différentes images suivant des directions d'observation différentes, différents domaines (21, 22) de l'hologramme étant affectés aux différentes voies et les domaines (21, 22) de l'hologramme (1) qui reconstituent chaque image en lumière incidente (70) présentant des sous-domaines qui ne participent pas à la reconstitution des images.

2. Caractéristique optique selon la revendication 1, dans laquelle les sous-domaines sont agencés de façon à donner un motif d'image reconnaissable ou une information reconnaissable lors de la reconstitution holographique du domaine (21, 22) auquel le sous-domaine appartient.

3. Caractéristique optique selon l'une des revendications 1 ou 2, dans laquelle les sous-domaines comprennent des parties évidées dans les domaines (21, 22) qui reconstituent chaque image en lumière incidente.

4. Caractéristique optique selon l'une des revendications 1 à 3, dans laquelle les sous-domaines comprennent des parties de chaque domaine (21, 22) auquel le sous-domaine concerné appartient dont les propriétés optiques ont été modifiées après coup au moyen d'un laser.

5. Caractéristique optique selon l'une des revendications 1 à 4, dans laquelle ledit au moins un hologramme (1) reconstitue holographiquement des faisceaux d'objet diffusés suivant des directions différentes.

6. Caractéristique optique selon l'une des revendications 1 à 5, dans laquelle ledit au moins un hologramme (1) reconstitue holographiquement des faisceaux d'objet dirigés suivant des directions différentes.

7. Caractéristique optique selon l'une des revendications 1 à 6, dans laquelle ledit au moins un hologramme (1) comprend une structure holographique estampée.

8. Caractéristique optique selon l'une des revendications 1 à 7, dans laquelle les domaines (21, 22) comprennent des hologrammes iridescents ayant chacun des couleurs séparées pour la reconstitution dans différentes directions d'observation.

9. Caractéristique optique selon l'une des revendications 1 à 8, dans laquelle les domaines (21, 22) comprennent chacun des hologrammes en volume, de préférence multicolores, pour la reconstitution dans différentes directions d'observation.

10. Caractéristique optique selon l'une des revendications 1 à 9, dans laquelle les domaines (21, 22) comprennent chacun plusieurs parties en forme de lignes, de préférence agencées de manière alternée, pour la reconstitution dans différentes directions d'observation.

11. Caractéristique optique selon l'une des revendications 1 à 10, dans laquelle les domaines comprennent chacun plusieurs parties comportant chacune au moins un pixel.

12. Caractéristique optique selon la revendication 11, dans laquelle les domaines contiennent chacun plusieurs parties comportant au moins un pixel par couleur de base pour la reconstitution holographique dans différentes directions d'observation.

13. Caractéristique optique selon l'une des revendications 1 à 12, dans laquelle ledit au moins un hologramme (1) présente une structure réfléchissante sur sa face arrière, de préférence comprend un revêtement métallique sur sa face arrière.

14. Caractéristique optique selon l'une des revendications 1 à 13, dans laquelle les sous-domaines comprennent des noircissements dans les domaines (21, 22) qui reconstituent chaque image en lumière incidente.

15. Caractéristique optique selon l'une des revendications 1 à 14, dans laquelle on utilise un hologramme à deux voies pour la reconstitution holographique de deux images suivant des directions d'observation différentes, configuré de façon à générer une image stéréoscopique à l'observation.

16. Caractéristique optique selon l'une des revendications 1 à 15, dans laquelle ledit au moins un hologramme (1) est agencé devant un fond sombre.

17. Procédé de génération d'une caractéristique optique, en particulier pour des papiers de valeur, **caractérisé par** les étapes consistant à :
a) Réaliser un hologramme à au moins deux voies (1), les informations destinées aux différentes voies étant enregistrées dans des domaines différents de l'hologramme (1),
b1) Modifier les propriétés optiques d'un sous-domaine d'un domaine pour la reconstitution dans une direction d'observation sous la forme d'un motif,
b2) Répéter l'étape b1) pour chaque voie, le cas échéant avec des motifs différents.

18. Procédé selon la revendication 17, dans lequel, à l'étape a), les différents domaines (21, 22) destinés à enregistrer les différentes voies lors de l'enregistrement de l'hologramme (1) sont sélectionnés par un masquage différent du matériau d'enregistrement holographique (1) avec un masque (3) dans le faisceau de lumière de l'objet ou dans le faisceau de lumière de référence.

19. Procédé selon la revendication 18, dans lequel un masque à lignes (3) est utilisé pour le masquage.

20. Procédé selon la revendication 19, dans lequel, pour changer de domaines (21, 22), le masque à lignes (3) est décalé afin d'enregistrer des voies différentes.

21. Procédé selon l'une des revendications 17 à 20, dans lequel
a1) On enregistre d'abord une première voie de l'hologramme (1) et ensuite on effectue l'étape b1) pour cette voie, et
a2) On répète l'étape a1) pour les autres voies.

22. Procédé de génération d'une caractéristique optique, en particulier pour des papiers de valeur, **caractérisé par** les étapes consistant à :
α1 ) Réaliser une première structure holographique qui reconstitue en lumière incidente une première voie d'un hologramme à au moins deux voies (1),
α2) Modifier les propriétés optiques d'un sous-domaine de la première structure holographique sous la forme d'un premier motif,
β1 ) Réaliser une deuxième structure holographique qui reconstitue en lumière incidente une deuxième voie de l'hologramme à au moins deux voies (1) sur une ou plusieurs régions partielles d'un matériau support par ailleurs transparent,
β2) Modifier les propriétés optiques d'un sous-domaine de la deuxième structure holographique sous la forme d'un deuxième motif,
γ) Déposer le matériau support de la deuxième structure holographique sur la première structure holographique.

23. Procédé selon la revendication 22, dans lequel les étapes α2) ou β2) s'effectuent avant l'étape γ).

24. Procédé selon l'une des revendications 22 ou 23, dans lequel la première structure holographique est déposée sur la totalité de la surface.

25. Procédé selon l'une des revendications 22 à 24, dans lequel les structures holographiques sont réalisées sous la forme de structures holographiques estampées.

26. Procédé selon la revendication 25, dans laquelle les étapes de réalisation des structures holographiques estampées comprennent une étape de métallisation et, lors de l'étape β1), une structure holographique estampée métallisée est d'abord réalisée pour la reconstitution de la deuxième voie et ensuite une partie de la métallisation est enlevée de façon que la deuxième voie soit reconstituée uniquement par la partie restante de la deuxième structure holographique et la partie dont la métallisation a été enlevée est transparente.

27. Procédé selon la revendication 26, dans lequel l'étape β2) s'effectue avant l'enlèvement partiel de la métallisation.

28. Procédé selon l'une des revendications 22 à 27, dans lequel, pour réaliser un hologramme à plus de deux voies, on répète les étapes β1), β2) et γ) pour chacune des autres voies.

29. Procédé selon l'une des revendications 17 à 28, dans lequel les propriétés optiques des sous-domaines des différents domaines (21, 22) dont les propriétés optiques doivent être modifiées sont modifiées au moyen d'un laser (31, 33).

30. Procédé selon la revendication 29, dans lequel les sous-domaines des domaines (21, 22) qui reconstituent une image holographiquement sont détruits ou noircis au moins en partie au moyen du laser.

31. Procédé selon l'une des revendications 17 à 30, dans lequel les sous-domaines des différents domaines (21, 22) dont les propriétés optiques doivent être modifiées reçoivent une surimpression telle qu'ils ne peuvent plus participer à la reconstitution holographique.

32. Procédé selon l'une des revendications 17 à 31, dans lequel l'hologramme (1) est fixé sur une surface sombre.

33. Procédé selon l'une des revendications 17 à 32, dans lequel l'hologramme (1) est fixé sur une surface réfléchissante.

34. Procédé selon l'une des revendications 17 à 33, dans lequel l'hologramme (1) est doté sur sa face arrière d'un revêtement réfléchissant, de préférence métallique.

35. Caractéristique optique selon l'une des revendications 1 à 15, dans laquelle ledit au moins un hologramme (1) est agencé devant un fond réfléchissant.

36. Support de données, en particulier papier de valeur, comportant au moins une caractéristique optique selon l'une des revendications 1 à 16 ou selon la revendication 35.
